# EUROPEAN PATENT APPLICATION

(11) **EP 3 015 965 A1**
(43) Date of publication of application: **04.05.2016**
(21) Application number: 15192181.4
(22) Date of filing: 29.10.2015
(51) Int. Cl.: G06F 3/048, H04L 12/28, H04W 76/02, H04M 1/725

(54) **METHOD AND APPARATUS FOR PROMPTING DEVICE CONNECTION**

(30) Priority: 29.10.2014 CN 201410593971
(71) Applicant: Xiaomi Inc., Beijing 100085 (CN)
(72) Inventor: FU, Qiang, 100085 Haidian District (CN); GAO, Ziguang, 100085 Haidian District (CN); WANG, Yang, 100085 Haidian District (CN)
(74) Representative: Sadler, Peter Frederick

(57) **Abstract**

The present disclosure relates to a method and an apparatus for prompting a device connection. The method and apparatus can display the content corresponding to the connection property of the connected device, which saves a switching operation process between the product specification and the product setting and results in a simple operation, and thus it is intuitive and convenient to provide the prompting information. The method includes: obtaining a connection property of a connected device after receiving a connecting instruction to connect a device; displaying prompting information matched with the connection property according to the connection property of the connected device.

## Description

### FIELD

Embodiments of the present invention generally relate to a communication technology field, and more particularly, to a method for prompting a device connection and an apparatus for prompting a device connection.

### BACKGROUND

A smart home, based on a house, integrates with facilities related to the household life by using a comprehensive wiring technology, a network communication technology, a security technology of a smart home-system design project, an audio and video technology, and builds an efficient management system of the facilities related to the household life and daily household matters. A smart home may improve security, convenience, comfort and artistry of the household life and may achieve an eco-friendly living environment. Compared with the common home, apart from the conventional living function, the smart home has a living environment combined with building, network communication and management, which is efficient, comfortable, safe, convenient and eco-friendly, and the smart home further provides an omni-directional mutual function for information.

In a related art, each smart device connected to a smart home must be mounted, connected and set according to steps illustrated in a product specification before it is used. However, it is troublesome to set the product while reading the product specification, and if the product specification is lost, it will be inconvenient to use the product.

### SUMMARY

The present disclosure provides a method for prompting a device connection and an apparatus for prompting a device connection in order to solve at least one of the problems existing in the related art.

According to a first aspect of embodiments of the present disclosure, there is provided a method for prompting a device connection in a smart home, including:
obtaining a connection property of a connected device after receiving a connecting instruction to connect a device;
displaying prompting information matched with the connection property according to the connection property of the connected device.

In an embodiment, receiving a connecting instruction to connect a device includes:
detecting that an icon of a device to be connected is selected; or
detecting that a column or a row in which the icon of the device to be connected is located is selected; or
detecting that the device to be connected is selected by operating a menu.

In an embodiment, obtaining a connection property of a connected device includes:
obtaining an identification of the connected device, and obtaining the connection property of the connected device according to a pre-stored correspondence between the identification and the connection property.

In an embodiment, displaying prompting information matched with the connection property includes:
jumping to a device connection prompting page;
displaying the prompting information matched with the connection property in the device connection prompting page.

In an embodiment, displaying prompting information matched with the connection property includes:
displaying text prompting information and image information corresponding to the text prompting information.

In an embodiment, the image information is matched with a current state of the connected device.

In an embodiment, displaying prompting information matched with the connection property further includes: displaying an option for continuing setting.

In an embodiment, displaying prompting information matched with the connection property further includes:
obtaining and displaying a current state of the connected device;
if the current state of the connected device is an abnormal state, displaying a prompt to process the abnormal state.

According to a second aspect of embodiments of the present disclosure, there is provided an apparatus for prompting a device connection, including:
a property obtaining module, configured to obtain a connection property of a connected device after receiving a connecting instruction to connect a device;
a displaying module, configured to display prompting information matched with the connection property according to the connection property of the connected device.

In an embodiment, the apparatus further includes a detecting module configured to: detect that an icon of a device to be connected is selected; or detect that a column or a row in which the icon of the device to be connected is located is selected; or detect that the device to be connected is selected by operating a menu.

In an embodiment, the property obtaining module is configured to obtain an identification of the connected device, and to obtain the connection property of the connected device according to a pre-stored correspondence between the identification and the connection property.

In an embodiment, the displaying module is configured to display the prompting information matched with the connection property in a device connection prompting page after jumping to the device connection prompting page.

In an embodiment, the displaying module is configured to display text prompting information and image information corresponding to the text prompting information.

In an embodiment, the displaying module is configured in such a manner that the image information is matched with a current state of the connected device.

In an embodiment, the displaying module is configured to display an option for continuing setting.

In an embodiment, the displaying module is configured to: obtain and display a current state of the connected device; display a prompt to process an abnormal state, if the current state of the connected device is the abnormal state.

According to a third aspect of embodiments of the present disclosure, there is provided an apparatus for prompting a device connection, including:
a processor;
a memory configured to store an instruction executable by the processor;
in which the processor is configured to:
   obtain a connection property of a connected device after receiving a connecting instruction to connect a device;
   display prompting information matched with the connection property according to the connection property of the connected device.

According to a fourth aspect of embodiments of the present disclosure, there is provided a non-transitory computer-readable storage medium having stored therein instructions that, when executed by a processor of a mobile terminal, causes the mobile terminal to perform a method for prompting a device connection according to the first aspect of the present disclosure.

The technical solution provided by embodiments of the present disclosure can display the content corresponding to the connection property of the connected device, which saves a switching operation process between the product specification and the product setting and results in a simple operation, and thus it is intuitive and convenient to provide the prompting information.

It is to be understood that both the foregoing general description and the following detailed description are exemplary and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for prompting a device connection according to an exemplary embodiment;
Fig. 2a and Fig. 2b are schematic diagrams illustrating a device list according to an exemplary embodiment;
Fig. 3a and Fig. 3b are schematic diagrams illustrating device connection prompting pages of different devices according to an exemplary embodiment;
Fig. 4 is a schematic diagram illustrating a setting page to be jumped to according to an exemplary embodiment;
Fig. 5 is a flow chart showing a method for prompting a device connection according to an exemplary embodiment;
Fig. 6 is a block diagram illustrating an apparatus for prompting a device connection according to an exemplary embodiment;
Fig. 7 is a block diagram illustrating f another apparatus for prompting a device connection according to an exemplary embodiment;
Fig. 8 is a block diagram illustrating another apparatus for prompting a device connection according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

Currently, a smart home has been used in families and various application scenarios widely. When a user sets a device to connect to a smart home network, it is required for him to find a product specification and to set the device while reading the product specification with reference to a corresponding application program (APP), thus resulting in a complex operation.

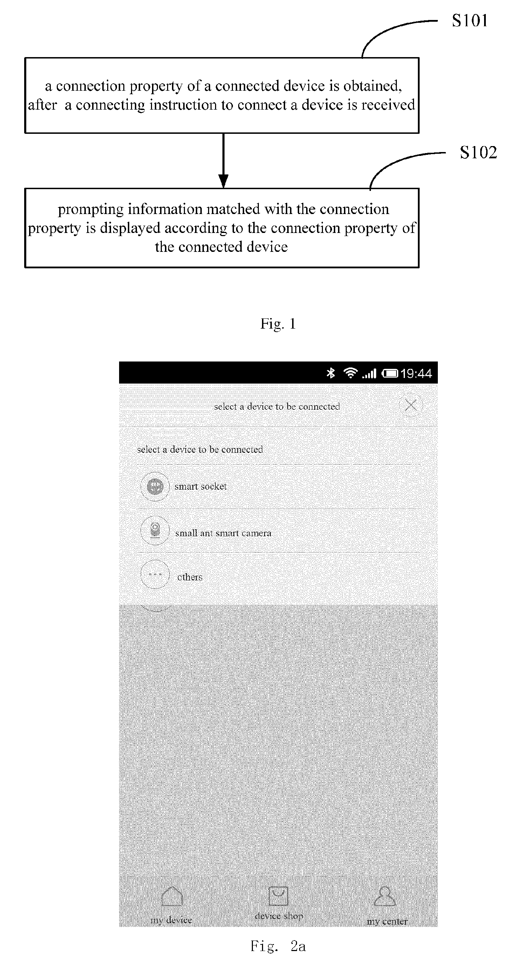

Fig. 1 is the flow chart showing a method for prompting a device connection according to an exemplary embodiment. As shown in Fig. 1, the method is suitable for a terminal and includes following steps.

In step S101, a connection property of a connected device is obtained, after a connecting instruction to connect a device is received.

In step S102, prompting information matched with the connection property is displayed according to the connection property of the connected device.

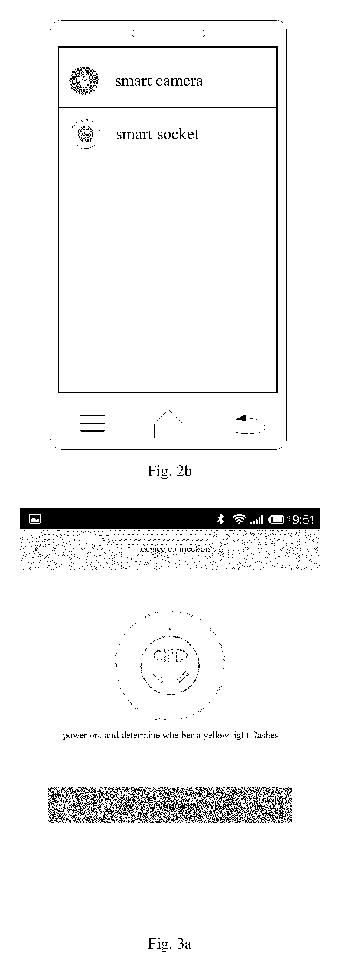

One or more identifications (such as an icon, a name, .etc.) of a device to be connected are displayed in a device list in a page, in which the identifications are configured to indicate an identity of the device to be connected. For example, the devices to be connected are a smart socket and a smart camera, as shown in Figs. 2a and 2b, the icons and names of the two devices are displayed in a list so as to prompt the user which device is to be connected. Certainly, the identifications of the devices are not limited to be displayed in the list, but in other displaying manners that have a same effect, such as a Matts, a Nine Patch or a scrolling page, .etc.

In an embodiment, receiving the connecting instruction to connect the device includes following steps: it is detected that an icon of a device to be connected is selected; or it is detected that a column or a row in which the icon of the device to be connected is located is selected; or it is detected that the device to be connected is selected by operating a menu. For example, when the device to be connected is displayed through the icon thereof and it is detected that the icon of the device is clicked, it is determined that the connecting instruction to connect the device is received. When the icon occupies a small space in the column or the row in which the icon is located and it is detected that the column or the row in which the icon of the device to be connected is located is selected, apart from clicking the icon, it is also determined that the connecting instruction to connect the device is received. In addition, the device to be connected may be selected by operating the menu. The above-descripted clicking operation is only exemplary, and other selecting manners such sliding and pressing may be used.

In an embodiment, obtaining the connection property of the connected device includes a following step: an identification of the connected device is obtained, and the connection property of the connected device is obtained according to a pre-stored correspondence between the identification and the connection property. For example, the correspondence between the identification and the connection property may be pre-stored locally, or may be pre-stored at a server side or a router side. When the correspondence between the identification and the connection property is pre-stored at the server side or the router side, the terminal may send a request to obtain the correspondence to the server side or the router side and receive the correspondence between the identification and the connection property returned by the server side or the router side.

The connection property may include a physical property of the device, such as one or more of an indicator light, an on-off key, a display screen, a cooling fin .etc. The connection property also may include a function property of the device, such as one or more of a Bluetooth function, an infrared function, a Wi-Fi function .etc.

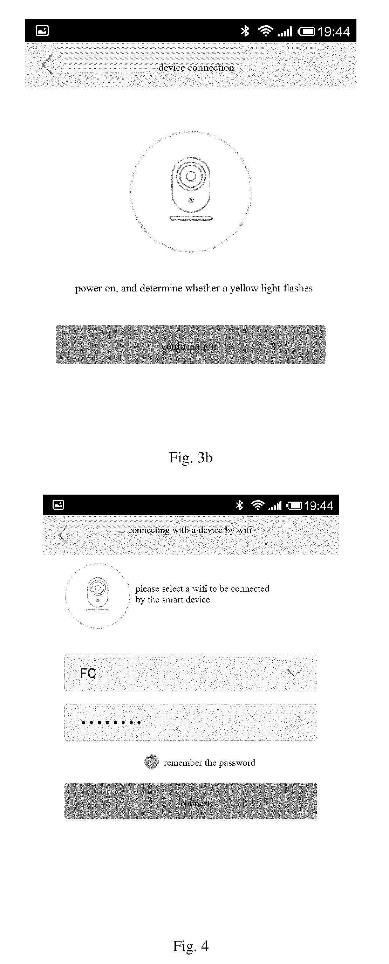

In an embodiment, displaying the prompting information matched with the connection property includes following steps: a device connection prompting page is jumped to and the prompting information matched with the connection property is displayed in the device connection prompting page. For example, when it is needed to display the prompting information matched with the connection property, the prompting information may be displayed in a current page directly, or the device connection prompting page may be jumped to and the prompting information may be displayed in the device connection prompting page. For example, when the smart socket in Fig. 2 is selected, the device connection prompting page as shown in Fig. 3a is jumped to. When the smart camera in Fig. 2 is selected, the device connection prompting page as shown in Fig. 3b is jumped to.

In an embodiment, displaying the prompting information matched with the connection property includes a following step: text prompting information and image information corresponding to the text prompting information are displayed. For example, as shown in Fig. 3a, the prompting information includes not only the text information such as "power on, and determine whether a yellow light flashes", but also the image information corresponding to the text information, which indicates that which one is the connected device. Moreover, the image information may be a static image or a dynamic image. For example, the image information is matched with the current state of the connected device. For instance, as shown in Fig. 3a, a position representing the indicator light in the image may have a light flashing effect, which may be a predetermined constant flashing effect or may be presented according to the current state of the connected device. For example, the current state of the connected device is an indicator light flashing state, and thus the indicator light in the image of the prompting information also flashes. Certainly, the current state of the connected device may be set to be corresponding to other display effects, such as an animation effect and a sound effect indicating that the device is normal.

Furthermore, the prompting information may include an option for continuing setting. For example, as shown in Fig. 3b, when the state of the connected device is consistent with the prompting information, proceeds to a next step by selecting an option "confirmation" and jumps to a setting page as shown in Fig. 4.

In an embodiment, after the prompting information matched with the connection property is displayed, the current state of the connected device may be obtained to display. For example, if the prompting information is "yellow light flashing changing into blue light flashing indicates a successful connection", the image information in the prompting information will change after the successful connection, i.e., the yellow light flashing changes into the blue light flashing. The text information in the prompting information also changes into "connected successfully" correspondingly.

In an embodiment, if the current state of the connected device is an abnormal state, a prompt to process the abnormal state will be displayed. For example, if the connected device crashes, a normal connection cannot be completed, and then the prompting information may be a prompt "please restart the device".

The technical solution provided by embodiments of the present disclosure can display the content corresponding to the connection property of the connected device, which saves a switching operation process between the product specification and the product setting and results in a simple operation, and thus it is intuitive and convenient to provide the prompting information.

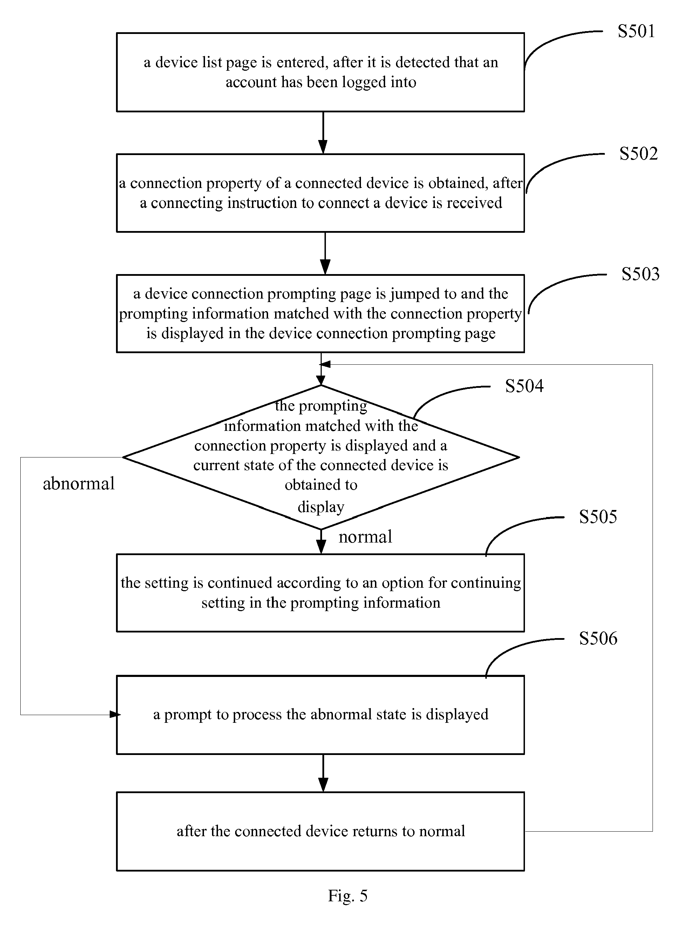

Fig. 5 is the flow chart showing a method for prompting a device connection according to an exemplary embodiment. As shown in Fig. 5, the method is suitable in a terminal and includes following steps.

In step S501, a device list page is entered, after it is detected that an account has been logged into.

In step S502, a connection property of a connected device is obtained, after a connecting instruction to connect a device is received. An identification of the connected device is obtained, and the connection property of the connected device is obtained according to a pre-stored correspondence between the identification and the connection property. The connection property may include a physical property of the device, such as one or more of an indicator light, an on-off key, a display screen, a cooling fin .etc. The connection property also may include a function property of the device, such as one or more of a Bluetooth function, an infrared function, a Wi-Fi function .etc.

In step S503, a device connection prompting page is jumped to and the prompting information matched with the connection property is displayed in the device connection prompting page. The prompting information may also be displayed in a current page directly.

In step S504, the prompting information matched with the connection property is displayed and a current state of the connected device is obtained to display. If the current state of the connected is a normal state, step S505 is executed; if the current state of the connected device is an abnormal state, step S506 is executed. For example, the prompting information includes text information "power on and determine whether a yellow light flashes", and also a current state of the indicator light of the connected device is obtained.

In step S505, the setting is continued according to an option for continuing setting in the prompting information. For example, as shown in Fig. 3b, when the state of the connected device is consistent with the prompting information, proceeds to a next step by selecting an option "confirmation" and jumps to a setting page as shown in Fig. 4.

In step S506, a prompt to process the abnormal state is displayed, and after the connected device returns to normal, step S504 is returned to. For example, if a abnormal situation occurs in the connected device and a normal connection cannot be completed, so the prompting information may be displayed as "Please long press the power button", "Please make sure the power is switched on", .etc.

The method provided by embodiments of the present disclosure can display the content corresponding to the connection property of the connected device, which saves a switching operation process between the product specification and the product setting and results in a simple operation, and thus it is intuitive and convenient to provide the prompting information.

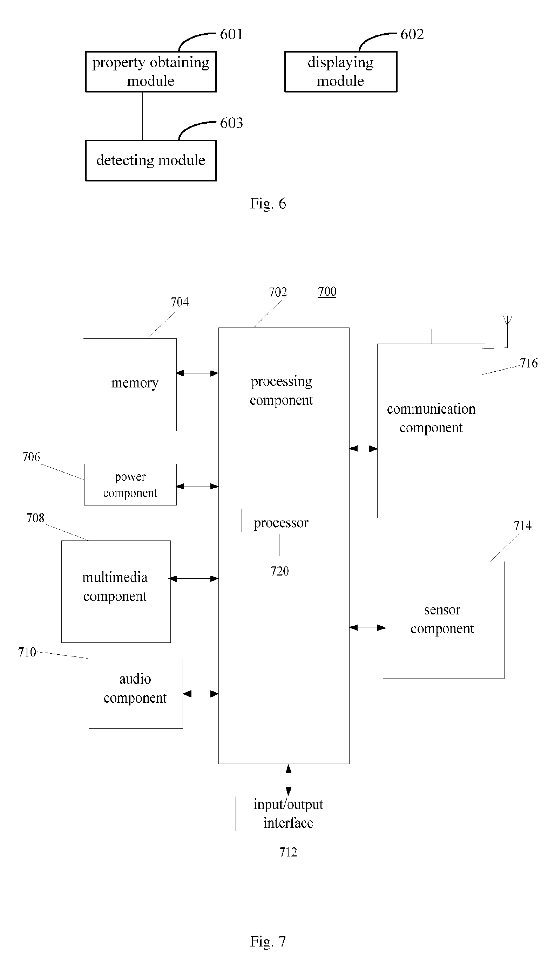

Embodiments of the present disclosure provide an apparatus for prompting a device connection, as shown in Fig. 6, including:
a property obtaining module 601, configured to obtain a connection property of a connected device after receiving a connecting instruction to connect a device;
a displaying module 602, configured to display prompting information matched with the connection property according to the connection property of the connected device.

In an embodiment, the apparatus further includes: a detecting module 603, configured to: detect that an icon of a device to be connected is selected; or detect that a column or a row in which the icon of the device to be connected is located is selected; or detect that the device to be connected is selected by operating a menu.

In an embodiment, the property obtaining module 601 is configured to obtain an identification of the connected device, and to obtain the connection property of the connected device according to a pre-stored correspondence between the identification and the connection property.

In an embodiment, the displaying module 602 is configured to display the prompting information matched with the connection property in a device connection prompting page after jumping to the device connection prompting page.

In an embodiment, the displaying module 602 is configured to display text prompting information and image information corresponding to the text prompting information.

In an embodiment, the displaying module 602 is configured in such a manner that the image information is matched with a current state of the connected device.

In an embodiment, the displaying module 602 is configured to display an option for continuing setting.

In an embodiment, the displaying module 602 is configured to: obtain and display a current state of the connected device; display a prompt to process an abnormal state, if the current state of the connected device is the abnormal state.

The technical solution provided by embodiments of the present disclosure can display the content corresponding to the connection property of the connected device, which saves a switching operation process between the product specification and the product setting and results in a simple operation, and thus it is intuitive and convenient to provide the prompting information.

With respect to the apparatus in the above embodiments, the specific manners for performing operations for individual modules therein have been described in detail in the embodiments regarding the methods for prompting the device connection, which will not be elaborated herein.

An apparatus for prompting a device connection is provided, which includes:
a processor;
a memory configured to store an instruction executable by the processor;
in which the processor is configured to:
   obtain a connection property of a connected device after receiving a connecting instruction to connect a device;
   display prompting information matched with the connection property according to the connection property of the connected device.

A non-transit computer-readable storage medium is provided, in which when the instructions in the storage medium are executed by the processor of a mobile terminal, the mobile terminal can execute a method for prompting a device connection, including:
obtaining a connection property of a connected device after receiving a connecting instruction to connect a device;
displaying prompting information matched with the connection property according to the connection property of the connected device.

In an embodiment, receiving a connecting instruction to connect a device includes:
detecting that an icon of a device to be connected is selected; or
detecting that a column or a row in which the icon of the device to be connected is located is selected; or
detecting that the device to be connected is selected by operating a menu.

In an embodiment, obtaining a connection property of a connected device includes:
obtaining an identification of the connected device, and obtaining the connection property of the connected device according to a pre-stored correspondence between the identification and the connection property.

In an embodiment, displaying prompting information matched with the connection property includes:
jumping to a device connection prompting page;
displaying the prompting information matched with the connection property in the device connection prompting page.

In an embodiment, displaying prompting information matched with the connection property includes:
displaying text prompting information and image information corresponding to the text prompting information.

In an embodiment, the image information is matched with a current state of the connected device.

In an embodiment, displaying prompting information matched with the connection property further comprises: displaying an option for continuing setting.

In an embodiment, displaying prompting information matched with the connection property further includes:
displaying an option for continuing setting.

Fig. 7 is the block diagram illustrating a device 700 for prompting a device connection, according to an exemplary embodiment and the device is suitable for a terminal. For example, the device 700 may be a mobile phone, a television, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700 such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as Wi-Fi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

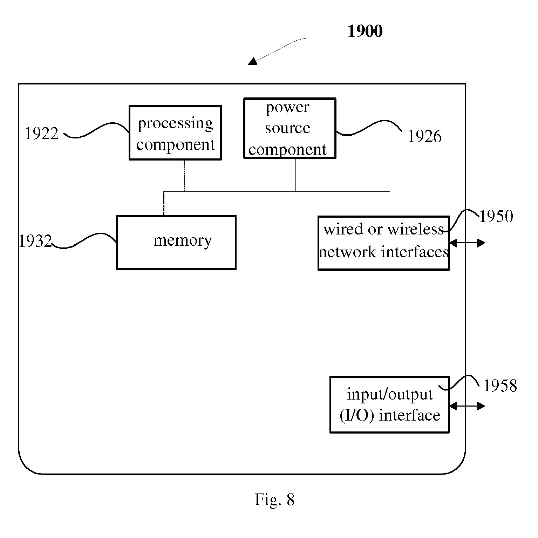

Fig. 8 is the block diagram illustrating an apparatus 1900 for prompting a device connection according to an exemplary embodiment. For example, the apparatus 1900 may be provided as a server. With reference to Fig. 8, the apparatus 1990 may include a processing component 1922, and further include one or more processors and a memory resource represented by a memory 1932, which is configured to store instructions such as application programs executable by the processing component 1922. The application program stored in the storage medium 1930 includes one or more modules, and each module is corresponding to a series of instructions. Furthermore, the processing component 1920 is configured to execute the series of instructions to execute the above method.

The apparatus 1900 may further include a power source component 1926 configured to execute a power source management, one or more wired or wireless network interfaces 1950 configured to access the apparatus 1900 to internet, and an input/output (I/O) interface 1958. The apparatus 1900 may be operated based an operating systems 1941 stored in the memory 1932, such as Windows ServerTM, Mac OS XTM, UnixTM, LinuxTM and FreeBSDTM.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

## Claims

1. A method for prompting a device connection, comprising:
obtaining a connection property of a connected device after receiving a connecting instruction to connect a device (S101);
displaying prompting information matched with the connection property according to the connection property of the connected device (S102).

2. The method according to claim 1, wherein receiving a connecting instruction to connect a device comprises:
detecting that an icon of a device to be connected is selected; or
detecting that a column or a row in which the icon of the device to be connected is located is selected; or
detecting that the device to be connected is selected by operating a menu.

3. The method according to claim 1 or 2, wherein obtaining a connection property of a connected device comprises:
obtaining an identification of the connected device, and obtaining the connection property of the connected device according to a pre-stored correspondence between the identification and the connection property.

4. The method according to any preceding claim, wherein displaying prompting information matched with the connection property comprises:
jumping to a device connection prompting page;
displaying the prompting information matched with the connection property in the device connection prompting page.

5. The method according to any preceding claim, wherein, displaying prompting information matched with the connection property comprises:
displaying text prompting information and image information corresponding to the text prompting information.

6. The method according to claim 5, wherein, the image information is matched with a current state of the connected device.

7. The method according to claim 5 or 6, wherein, displaying prompting information matched with the connection property further comprises:
displaying an option for continuing setting.

8. The method according to any of claims 5 to 7, wherein, displaying prompting information matched with the connection property further comprises:
obtaining and displaying a current state of the connected device;
if the current state of the connected device is an abnormal state, displaying a prompt to process the abnormal state.

9. An apparatus for prompting a device connection, comprising:
a property obtaining module (601), configured to obtain a connection property of a connected device after receiving a connecting instruction to connect a device;
a displaying module (602), configured to display prompting information matched with the connection property according to the connection property of the connected device.

10. The apparatus according to claim 9, further comprising: a detecting module (603) configured to:
detect that an icon of a device to be connected is selected; or
detect that a column or a row in which the icon of the device to be connected is located is selected; or
detect that the device to be connected is selected by operating a menu.

11. The apparatus according to claim 9 or 10, wherein:
the property obtaining module (601) is configured to obtain an identification of the connected device, and to obtain the connection property of the connected device according to a pre-stored correspondence between the identification and the connection property; and/or
the displaying module (602) is configured to display the prompting information matched with the connection property in a device connection prompting page after jumping to the device connection prompting page.

12. The apparatus according to any of claims 9 to 11, wherein the displaying module (602) is configured to display text prompting information and image information corresponding to the text prompting information.

13. The apparatus according to claim 12, wherein:
the displaying module (602) is configured in such a manner that the image information is matched with a current state of the connected device;
the displaying module (602) is configured to display an option for continuing setting; and
the displaying module (602) is configured to:
obtain and display a current state of the connected device; and
display a prompt to process an abnormal state, if the current state of the connected device is the abnormal state.

14. An apparatus for prompting a device connection, **characterized by** comprising:
a processor;
a memory configured to store an instruction executable by the processor;
wherein the processor is configured to perform the method of any of claims 1 to 8.

15. A non-transitory computer-readable storage medium having stored therein instructions that, when executed by a processor of a mobile terminal, causes the mobile terminal to perform a method according to any one of claims 1-8.
